(19) Europäisches Patentamt / European Patent Office / Office européen des brevets

(11) **EP 4 749 321 A1**

(12) **EUROPEAN PATENT APPLICATION**

(43) Date of publication:
**27.05.2026 Bulletin 2026/22**

(21) Application number: **24214914.4**

(22) Date of filing: **22.11.2024**

(51) International Patent Classification (IPC):
**G01S 7/40** (2006.01)    **G01S 13/42** (2006.01)
**G01S 13/87** (2006.01)

(52) Cooperative Patent Classification (CPC):
**G01S 13/87; G01S 7/4021; G01S 13/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **KOPPELAAR, Arie Geert Cornelis**
  **5656AG Eindhoven (NL)**

• **CIACCI, Massimo**
  **5656AG Eindhoven (NL)**
• **BEKOOIJ, Marco Jan Gerrit**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire SO51 9NJ (GB)**

Remarks:
Claims filed after the date of filing of the application (Rule 68(4) EPC).

(54) **CARRIER PHASE OFFSET CORRECTION IN COHERENT DISTRIBUTED RADAR SYSTEMS**

(57) First antennas in a first radar sensor receive first signals transmitted by one or more second antennas in a second radar sensor and reflected by at least one object. Third antennas in the second radar sensor receive second signals transmitted by one or more fourth antennas in the first radar sensor and reflected by the at least one object. A snapshot that includes complex values that represent phase responses of the first signals and the second signals is generated and a carrier phase offset between the first signals and the second signals is estimated based on the snapshot. In some cases, an output representing detection of an object is generated based on the carrier phase offset.

FIG. 1

**Description**

BACKGROUND

Advanced driver assistance systems (ADASs) support a human-machine interface for automobiles and other vehicles to reduce driver errors, collisions, and injuries. An ADAS includes cameras, sensors, and associated hardware and software that can detect obstacles or driver errors and then provide warnings or take action to avoid collisions. Examples of ADAS functionality include forward collision warnings, lane departure warnings, rear cross traffic warnings, blind spot warnings, automatic braking, automatic pedestrian emergency braking, rear braking, blind spot intervention, adaptive cruise control, lane centering assistance, and lane keeping assistance. The sensing technologies employed by an ADAS include light detection and ranging (lidar), cameras, ultrasound, and radar. Automotive radar sensors can concurrently measure the ranges, radial velocities, azimuth angles, and elevation angles of multiple objects.
A vehicular radar system can include a single collocated transmitter and receiver (monostatic), transmitters and receivers deployed at two locations (bistatic), and transmitters and receivers deployed at more than two locations (multistatic). Distributing the transmitters and receivers across multiple locations can increase the signal-to-noise ratio (SNR) of the system, increase positioning accuracy, improve velocity vector estimation, improve spatial resolution, and enhance the signal information body. Multiple-input, multiple-output (MIMO) configurations deploy multiple transmitter and receiver antennas at each location to improve the angular resolution and accuracy of the radar system. Bistatic or multistatic radar sensors require synchronization in time, frequency, and phase, as well as additional data transmission links, higher computational complexity, and accurate station positioning.

SUMMARY

According to a first aspect of the present disclosure, there is provided a method comprising: receiving, by first antennas in a first radar sensor, first signals transmitted by at least one second antenna in a second radar sensor and reflected by at least one object; receiving, by third antennas in the second radar sensor, second signals transmitted by at least one fourth antenna in the first radar sensor and reflected by the at least one object; generating a snapshot comprising complex values that represent phase responses of the first signals and the second signals; and estimating a carrier phase offset between the first signals and the second signals based on the snapshot.
In one or more embodiments, the snapshot comprises first information indicating relative phases of the first signals received by the first antennas and second information indicating relative phases of the second signals received by the third antennas.
In one or more embodiments, the method further comprises: generating, based on the snapshot, a virtual array that represents the phase responses of the first signals as a function of separations between the first antennas and the at least one second antenna and the phase responses of the second signals as a function of separations between the third antennas and the at least one fourth antenna. The virtual array may comprise a plurality of piecewise linear phase relations corresponding to positions of the at least one second antenna and the at least one fourth antenna.
The method may further comprise: determining slopes of the plurality of piecewise linear phase relations based on a first direction-of-arrival of the first signals and a second direction-of-arrival of the second signals; determining offsets between the plurality of piecewise linear phase relations based on a first direction-of-departure of the first signals and a second direction-of-departure of the second signals; and estimating the carrier phase offset based on the slopes and the offsets.
In one or more embodiments, the first signals and the second signals are reflected by a single object, and wherein estimating the carrier phase offset comprises estimating the carrier phase offset based on phase differences between the first signals and the second signals. The virtual array may be symmetric, the method further comprising: generating a difference snapshot by multiplying the complex values of the first signals with complex conjugates of the complex values of the second signals that share a position of a virtual antenna in the virtual array after folding; and estimating the carrier phase offset based on the difference snapshot. Estimating the carrier phase offset may comprise: determining a beamforming spectrum based on a Fourier transform of the difference snapshot; identifying a peak location in the beamforming spectrum and a spectrum peak value; and performing an inverse Fourier transform of the spectrum peak value to estimate the carrier phase offset.
In one or more embodiments, the method further comprises: generating an output representing detection of an object based on the carrier phase offset.
According to a second aspect of the present disclosure, there is provided an apparatus comprising: a first radar sensor comprising a plurality of first antennas and at least one second antenna; a second radar sensor comprising a plurality of third antennas and at least one fourth antenna, the first antennas being configured to receive first signals transmitted by the at least one fourth antenna and reflected by at least one object, the third antennas configured to receive second signals transmitted by the at least one second antenna and reflected by the at least one object; and at least one processing unit configured to generate a snapshot comprising complex values that represent phase responses of the first signals and the second signals and estimate a carrier phase offset between the first signals and the second signals based on the snapshot.

In one or more embodiments, the snapshot comprises first information indicating relative phases of the first signals received by the first antennas and second information indicating relative phases of the second signals received by the third antennas.

In one or more embodiments, the processing unit is configured to generate, based on the snapshot, a virtual array that represents the phase responses of the first signals as a function of separations between the first antennas and the at least one fourth antenna and the phase responses of the second signals as a function of separations between the third antennas and the at least one second antenna. The virtual array may comprise a plurality of piecewise linear phase relations corresponding to positions of the at least one second antenna and the at least one fourth antenna. The processing unit may be configured to:

determine slopes of the plurality of piecewise linear phase relations based on a first direction-of-arrival of the first signals and a second direction-of-arrival of the second signals; determine offsets between the plurality of piecewise linear phase relations based on a first direction-of-departure of the first signals and a second direction-of-departure of the second signals; and estimate the carrier phase offset based on the slopes and the offsets. The processing unit may be configured to determine the slopes and the offsets using a least-squares method.

In one or more embodiments, the first signals and the second signals are reflected by a single object, and wherein the processing unit is configured to estimate the carrier phase offset based on phase differences between the first signals and the second signals. The virtual array may symmetric, and the processing unit may be configured to: generate a difference snapshot by multiplying the complex values of the first signals with complex conjugates of the complex values of the second signals that share a virtual antenna position in the virtual array after folding; and estimate the carrier phase offset based on the difference snapshot. The processing unit may be configured to: determine a beamforming spectrum based on a Fourier transform of the difference snapshot; identify a peak location in the beamforming spectrum and a spectrum peak value; and perform an inverse Fourier transform of the peak spectrum value to estimate the carrier phase offset.

According to a first aspect of the present disclosure, there is provided an apparatus comprising: a plurality of radar sensors, wherein each of the plurality of radar sensors comprise a plurality of receive antennas and at least one transmit antenna, the receive antennas in a first subset of the radar sensors being configured to receive first signals transmitted by the transmit antennas in a second subset of the radar sensors and reflected by at least one object, the receive antennas in the second subset of the radar sensors being configured to receive second signals transmitted by the at least one transmit antenna in the first subset of the radar sensors and reflected by at least one object; and at least one processing unit configured to generate a snapshot comprising complex values that represent phase responses of the first signals and the second signals and estimate a carrier phase offset between the first signals and the second signals based on the snapshot. The at least one processing unit may be configured to estimate the carrier phase offset based on offsets between piecewise linear phase relations in the phase responses of the first signals and the second signals, the piecewise linear phase relations corresponding to at least one position of the at least one transmit antenna.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 illustrates a coherent distributed radar system that includes two or more radar sensors that detect objects using reflected coherent radiation, according to some embodiments.

FIG. 2 illustrates path length differences between reflected signals in a portion of a coherent distributed radar system, according to some embodiments.

FIG. 3 illustrates a piecewise linear phase relationship and a linear phase relationship after correcting for a carrier phase offset, according to some embodiments.

FIG. 4 illustrates a bistatic virtual array that represents the transmission paths between transmit antennas and receive antennas in two radar sensors, according to some embodiments.

FIG. 5 illustrates the phase response of a bistatic virtual array for signals generated by two radar sensors, reflected from a single object, and received by the two radar sensors, according to some embodiments.

FIG. 6 illustrates a method of performing distributed coherent radar detection including correcting for a carrier phase offset, according to some embodiments.

FIG. 7 illustrates a piecewise linear model of phase in a bistatic array snapshot, according to some embodiments.

FIG. 8 illustrates a method of estimating a carrier phase offset between two radar sensors in a coherent distributed radar system using a least-squares method, according to some embodiments.

FIG. 9 illustrates a method of estimating a carrier phase offset between two radar sensors in a coherent distributed radar system using a spectrum-based technique applied to phase differences between pairs of signals, according to some embodiments.

DETAILED DESCRIPTION

To locate an object, a vehicular radar system transmits coherent, phase aligned signals from one or more transmit antennas. The transmitted signals are reflected by the object and return to the receiver antennas in the vehicular radar system. For a monostatic radar system, the direction-of-departure (DoD) of signals transmitted by the transmit antennas is equal to the direction-of-arrival (DoA) of the reflected signals received by the receiver antennas. Thus, the path lengths from a transmit antenna to the collocated receiver antennas differ by an amount proportional to $d \sin \varphi$, where $d$ is a distance between the receiver antennas and $\varphi$ is the DoA of the reflected signals at the receiver antennas. The different path lengths introduce phase differences between the signals received at the receiver antennas, and the relationship between the phases of the signals received at the different receiver antennas is characterized by a linear phase slope that is determined by the DoA. In contrast, a bistatic radar system combines signals that are transmitted by one radar sensor and received in another radar sensor. For example, the DoD of signals transmitted from transmit antennas in a first radar sensor of a bistatic radar system is not necessarily the same as the DoA of the signals received at the receiver antennas in a second radar sensor in the bistatic radar system. Angular estimation of targets in the bistatic radar system is done by analyzing phase differences of received signals. These phases are determined by differences in path lengths between the transmitter, target, and receivers. In the bistatic radar system, the phase differences have an extra phase offset caused by differences in the carrier wave frequency of the two or more radar sensors. This carrier phase offset has to be estimated and corrected before phase differences due to path length differences can be analyzed.

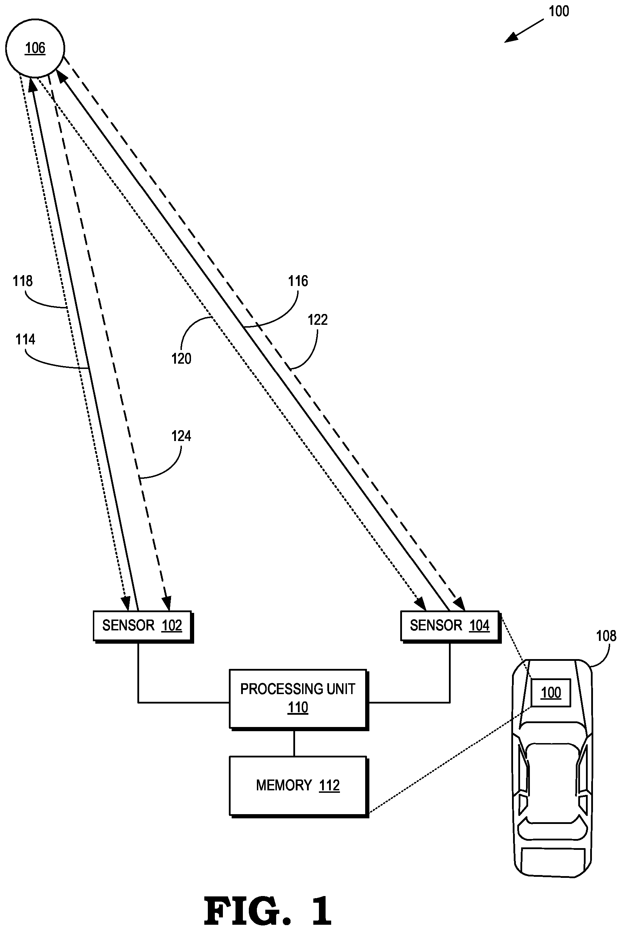

FIGs. 1-9 illustrate systems, apparatuses, and methods of estimating a carrier phase offset between multiple radar sensors by comparing phase differences between signals transmitted by antennas in one of the radar sensors and received by antennas in a different one of the radar sensors. In some cases, a radar system detects an object using a first radar sensor and a second radar sensor that each include one or more transmit antennas and one or more receive antennas. The radar system generates a snapshot that includes a set of complex values representing (among other things) a phase response of signals conveyed between the combinations of transmit antennas and receive antennas.

A bistatic virtual array represents the phase response as a function of a separation between the transmit antenna and the receive antenna for the corresponding signal. For example, a snapshot can include first information indicating relative phases of signals transmitted by the transmit antennas in the first radar sensor and received by the receive antennas in the second radar sensor. The snapshot can also include second information indicating relative phases of signals transmitted by the transmit antennas in the second radar sensor and received by the receive antennas in the first radar sensor. In this case, the bistatic virtual array includes piecewise linear phase relations corresponding to the positions of the transmit antennas.

The slopes of the linear phase relations are determined by the direction-of-arrival of signals at the corresponding receive antennas. The offsets of the linear phase relations from each other are determined by the direction-of-departure of the signals at the corresponding transmit antennas. In one embodiment, a least-squares method is used to estimate the parameters of the linear phase relations and then these parameters are used to estimate the carrier phase offset between the first radar sensor and the second radar sensor. If the snapshot contains a single object and the corresponding bistatic array is symmetrical, the carrier phase offset can be determined based on phase differences between signals transmitted from the first radar sensor to the second radar sensor and signals transmitted from the second radar sensor to the first radar sensor. However, symmetry of the bistatic array is not required in all embodiments, as discussed herein.

FIG. 1 illustrates a coherent distributed radar system 100 that includes two or more radar sensors 102, 104 that detect objects 106 using reflected coherent radiation, according to some embodiments. The illustrated embodiment of the coherent distributed radar system 100 is implemented in a vehicle 108 and can therefore be used as a portion of an advanced driver assistance system (ADAS). However, the coherent distributed radar system 100 can also be implemented in other contexts or environments such as industrial applications that require dynamic real-time identification of objects proximate the coherent distributed radar system 100.

The coherent distributed radar system 100 also includes one or more processing units 110 and one or more memories 112. The processing unit 110 implements circuitry such as a plurality of processor cores (not shown in FIG. 1 in the interest of clarity) that execute instructions concurrently or in parallel. In some embodiments, one or more of the processor cores operate as single-instruction-multiple-data (SIMD) units that perform the same operation on different data sets concurrently or in parallel. The processing unit 110 is configured to execute instructions such as program code for one or more applications, which is stored in the memory 112. Data consumed by the processing unit 110 while executing instructions and results produced by the processing unit 110 can also be stored in the memory 112.

The radar sensors 102, 104 include one or more transmit antennas for transmitting coherent radiation and one or more receive antennas for receiving portions of the coherent radiation that are reflected from the object 106. The individual antennas are not shown in FIG. 1 in the interest of clarity. In the illustrated embodiment, the radar sensor 102 transmits radiation along a path 114 towards the object 106 and the radar sensor 104 transmits radiation along a path 116 towards the object 106. A portion of the radiation transmitted by the radar sensor 102 is reflected by the object 106 and returns to the sensor 102 along the path 118; another portion of the radiation transmitted by the radar sensor 102 is reflected by the object 106 and returns to the radar sensor 104 along the path 120. A portion of the radiation transmitted by the radar sensor 104 is reflected by the object 106 and returns to the radar sensor 104 along the path 122; another portion of the radiation transmitted by the radar sensor 104 is reflected by the object 106 and returns to the sensor 102 along the path 124.

As discussed herein, different lengths of the paths between transmit antennas and receive antennas in the radar sensors 102, 104 generate phase differences between the signals received at the radar sensors 102, 104. These phase differences can be used to determine, among other things, a location (position) and a velocity of the object 106. In some instances, the velocity can be referred to as a Doppler velocity because the velocity can be determined based on Doppler shifts in the frequencies of the signals. However, differences between the carrier phases of the carrier waves used by the front ends of the radar sensors 102, 104 produce a carrier phase offset between signals that are transmitted by one of the radar sensors 102, 104 and received by the other one of the radar sensors 102, 104. In the illustrated embodiment, a carrier phase offset is produced between signals received at the radar sensor 102 along the path 124 (*i.e.*, signals transmitted by the radar sensor 104) and signals received at the radar sensor 104 along the path 120 (*i.e.*, signals transmitted by the radar sensor 102), even though the path lengths of paths 120, 124 are the same. The carrier phase offset reduces the accuracy of the location determination of the object 106 because the carrier phase offset causes the phase differences to be inconsistent with the lengths of the paths 120, 124.

The carrier phase offset can be estimated and corrected based on the signals transmitted by each of the radar sensors 102, 104 and received by a different one of the radar sensors 102, 104. In some embodiments, one or more receive antennas in the radar sensor 102 receives signals (on the path 124) transmitted by one or more transmit antennas in the radar sensor 104, and one or more receive antennas in the radar sensor 104 receives signals (on the path 120) transmitted by one or more transmit antennas in the radar sensor 102. The processing unit 110 generates a snapshot that includes complex values that represent phase responses of the signals received by the receive antennas in the radar sensors 102, 104. The processing unit 110 then estimates a carrier phase offset between the signals received by the receive antennas in the radar sensors 102, 104 based on the snapshot.

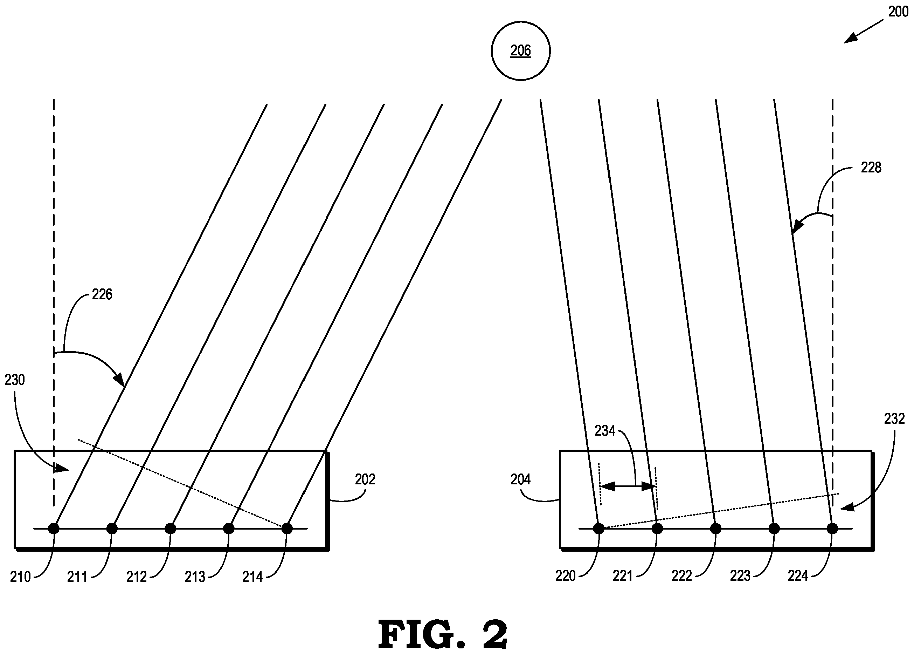

FIG. 2 illustrates path length differences between reflected signals in a portion 200 of a coherent distributed radar system, according to some embodiments. The portion 200 is implemented in some embodiments of the coherent distributed radar system 100 shown in FIG. 1. The portion 200 includes radar sensors 202, 204 that transmit and receive coherent electromagnetic radiation that can be reflected off on one or more objects such as the object 206. In the illustrated embodiment, the radar sensor 202 includes antennas 210, 211, 212, 213, 214 (collectively referred to herein as "the antennas 210-214") and the radar sensor 204 includes antennas 220, 221, 222, 223, 224 (collectively referred to herein as "the antennas 220-224"). The antennas 210, 211 in the radar sensor 202 and the antennas 220, 221 in the radar sensor 204 are configured to transmit signals including coherent electromagnetic radiation. The antennas 212-214 in the radar sensor 202 and the antennas 222-224 in the radar sensor 204 are configured to receive signals including coherent electromagnetic radiation that has been reflected from the object 206. In some embodiments, the antennas 214, 224 are also configured to transmit signals including coherent electromagnetic radiation.

The direction-of-departure of the coherent electromagnetic radiation from the radar sensors 202, 204 and the direction-of-arrival of the coherent electromagnetic radiation at the radar sensors 202, 204 depends on the relative position of the object 206 and the sensors 202, 204. Thus, the angles that indicate the direction-of-departure and direction-of-arrival differ at the radar sensors 202, 204. In the illustrated embodiment, the angle 226 (also referred to herein as $\varphi_1$) indicates the direction-of-departure and direction-of-arrival at the radar sensor 202 and the angle 228 (also referred to herein as $\varphi_2$) indicates the direction-of-departure and direction-of-arrival at the radar sensor 204. The angles 226, 228 result in corresponding path length differences 230, 232 between the coherent electromagnetic radiation transmitted and/or received by the antennas 210-214, 220-224. The path length differences 230, 232 introduce phase differences between the transmitted and/or received signals. If the spacing between the antennas 210-214, 220-224, *e.g.*, the distance 234, is represented as *d*, then the phase difference between neighboring antennas 210-214 in the radar sensor 202 is linear with the value $d \sin \varphi_1$ and the phase difference between neighboring antennas 220-224 in the radar sensor 204 is linear with the value $d \sin \varphi_2$. A carrier phase offset will also be present between the linear phase relations of the antennas 210-214 in the radar sensor 202 and the antennas 220-224 in the radar sensor 204. Subsets of the antennas 210-214 in the radar sensor 202 and the antennas 220-224 in the radar sensor 204 are used to estimate the carrier phase offset, as discussed herein.

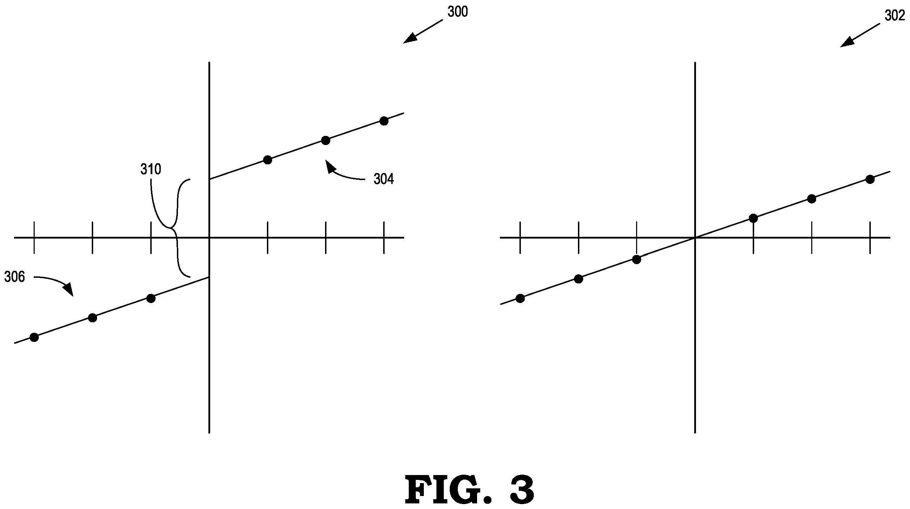

FIG. 3 illustrates a piecewise linear phase relationship 300 and a linear phase relationship 302 after correcting a carrier phase offset, according to some embodiments. The horizontal axis represents a separation between the antennas in two sensors, which can be measured in multiples of a wavelength of coherent signals transmitted from and received by the sensors. The vertical axis represents a relative phase of signals received at the corresponding antennas. In some embodiments, the piecewise linear phase relationship 300 and the linear phase relationship 302 represent phase relationships between signals received by antennas in the radar sensors 102, 104 shown in FIG. 1 and the sensors 202, 204 shown in FIG. 2.

As described herein, the slope of the portions of the piecewise linear phase relationship 300 and the linear phase relationship 302 is related to a direction-of-arrival and/or direction-of-departure of the signals. Although the slope in the illustrated embodiment is the same for the piecewise linear phase relationship 300 and the linear phase relationship 302, in some embodiments, portions of the piecewise linear phase relationship 300 and/or the linear phase relationship 302 can have different slopes because separations between the sensors create differences between the direction-of-arrival and/or the direction-of-departure of the signals at different sensors.

Prior to correcting for the carrier phase offset, the piecewise linear phase relationship 300 includes two portion 304, 306 that represent the linear phase relationships between signals received at antennas in different sensors. For example, the portion 304 of the piecewise linear phase relationship 300 represents relationships between signals received at antennas in a first sensor and the portion 306 of the piecewise linear phase relationship 300 represents relationships between the signals received at antennas in a second sensor. A discontinuity 310 between the portions 304, 306 at the origin (*i.e.*, a midway or zero point between the antennas) represents the carrier phase offset between the signals received by the different antennas.

After correcting for the carrier phase offset, the linear phase relationship 302 is substantially continuous and linear with a slope corresponding to the slopes of the portions 304, 306. As discussed herein, the carrier phase offset is estimated by extrapolating the phase of complex values representing the received signals to a center of a virtual antenna array. The phase of the complex value corresponds to an argument of a phasor that represents the received signal. In some embodiments, the phase is extrapolated based upon a least-squares method. In other embodiments, the phase is extrapolated based on a Fast Fourier Transform (FFT) of products of pairs of complex values associated with the same antenna. The extrapolation process can also provide information indicating whether the signals are produced by a single bounce reflection or a multipath reflection.

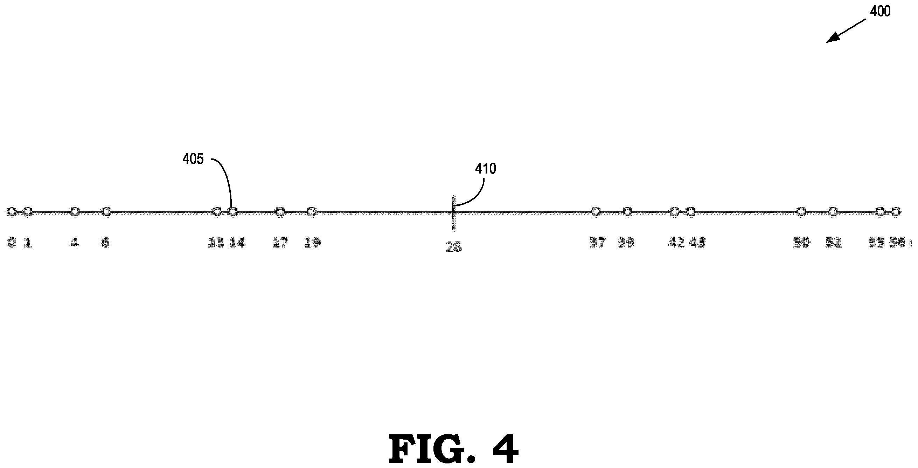

FIG. 4 illustrates a bistatic virtual array 400 that represents the transmission path between transmit antennas and receive antennas in two radar sensors, according to some embodiments. A bistatic array that corresponds to some embodiments of the bistatic virtual array 400 can be constructed to represent transmission paths between the antennas 210-214 in the radar sensor 202 and the antennas 220-224 in the radar sensor 204.

In the illustrated embodiment, the bistatic virtual array 400 includes two sets of elements corresponding to transmission paths that originate in two different radar sensors. A first set of elements represents paths from transmitting antennas in a first radar sensor that are received at receive antennas in a second radar sensor. A second set of elements represents paths from transmitting antennas in the second radar sensor that are received by receive antennas in the first radar sensor. The first radar sensor is implemented as a monostatic radar array that includes four receive antenna elements placed at relative positions {0, 1, 4, 6} $\lambda/2$ and two transmit antenna elements placed at the positions {15, 28} $\lambda/2$ relative to the first receive antenna element, where $\lambda$ is a wavelength of the coherent radiation transmitted from the first and second radar sensors. The second radar sensor is implemented as a monostatic radar array that includes four receive antenna elements placed at relative positions {22, 24, 27, 28} $\lambda/2$ and two transmit antenna elements placed at the positions {0,13} $\lambda/2$ relative to the first receive antenna element. Thus, the antenna pattern in the first radar sensor is mirrored by the antenna pattern in the second radar sensor.

The bistatic virtual array 400 is created by combining the relative positions of the transmit antenna elements in one radar sensor with the relative positions of the receive antenna elements in the other radar sensor. Thus, the bistatic virtual array 400 is represented as {0, 1, 4, 6,13,14,17,19, 37, 39, 42, 43, 50, 52, 55, 56} $\lambda/2$, which indicates the positions of the virtual antenna elements 405 (only one indicated by a reference numeral in the interest of clarity). The bistatic virtual array 400 has a midpoint 410 at the relative position {28} $\lambda/2$. In some embodiments, the first and second radar sensors are deployed with a baseline separation of $B$ and in that case the relative antenna positions of the first radar sensor are shifted $-B/2$ and the relative antenna positions of the second radar sensor are shifted $+B/2$. If coherent electromagnetic radiation is reflected from a single object, the phase relations between the signals received at the virtual antenna elements 405 in the bistatic virtual array 400 will be piecewise linear and have a linear phase property related to the direction-of-arrival and direction-of-departure of the coherent election magnetic radiation.

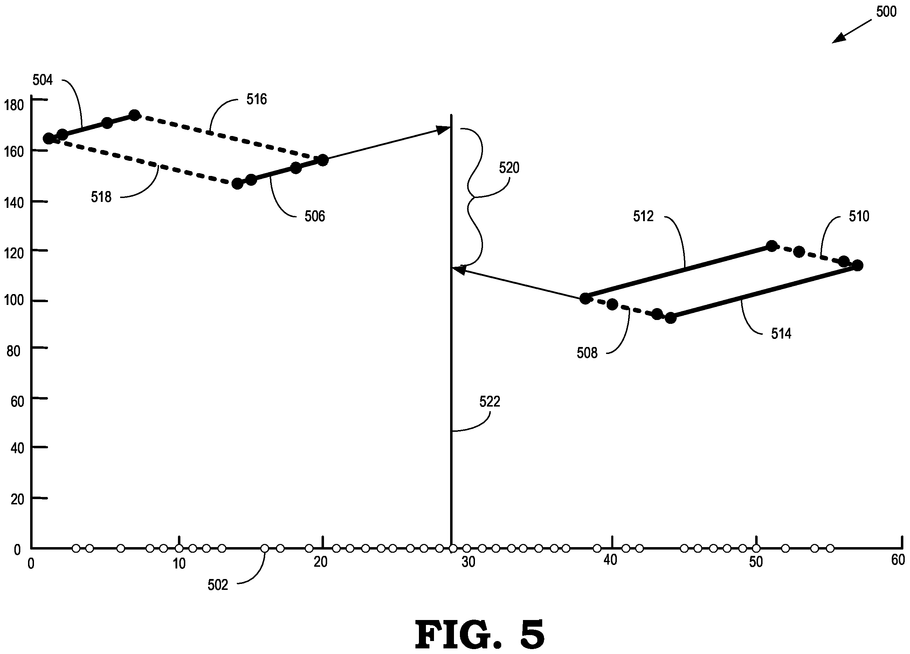

FIG. 5 illustrates the phase response 500 of a bistatic virtual array for signals generated by two radar sensors, reflected from a single object, and received by the two radar sensors, according to some embodiments. The horizontal axis indicates relative positions of the virtual antenna elements 502 (only one indicated by a reference numeral in the interest of clarity). In the illustrated embodiment, the virtual antenna elements 502 are shifted one position to the right, which has no impact on the following analysis. The vertical axis indicates an angle of the relative phase response. In the illustrated embodiment, the phase response 500 is determined for elements of the bistatic virtual array 400 shown in FIG. 4.

At the first radar sensor, the reflected signals are received with a first direction-of-arrival that determines a slope of the phase response of the elements {1, 2, 5, 7} $\lambda/2$ and {14, 15, 18, 20} $\lambda/2$, which correspond to the two transmit antennas at the second radar sensor. Note that the element positions shown in FIG. 4 are shifted by $\lambda/2$ relative to the element positions shown in FIG. 4, which does not affect the carrier phase offset estimation. The lines 504, 506 indicate the slope determined by the first direction-of-arrival. The second radar sensor receives reflected signals at a second direction-of-arrival that determines a different slope of the phase response of the elements {38, 40, 43, 44} $\lambda/2$ and {51, 53, 56, 57} $\lambda/2$, which correspond to the two transmit antennas at the first radar sensor. The lines 508, 510 indicate the slope determined by the second direction-of-arrival. The first direction-of-arrival at the first radar sensor corresponds to the direction-of-departure of signals transmitted by the second radar sensor, and the second direction-of-arrival at the second radar sensor corresponds to the direction-of-departure of signals transmitted by the first radar sensor. Consequently, the slope of the lines 504, 506 is the same as the slope of the lines 512, 514 that indicate an offset between the phase response associated with different transmit antennas. Similarly, the slope of the lines 508, 510 is the same as the slope of the lines 516, 518.

A carrier phase offset 520 between the first and second radar sensors is estimated by extrapolating lines 504, 506, 508, 510 that represent the phase responses associated with the two radar sensors. In the embodiment illustrated in FIG. 5, the lines 504, 506, 508, 510 are extrapolated to a hypothetical central element 522 that is located at {29} $\lambda/2$.

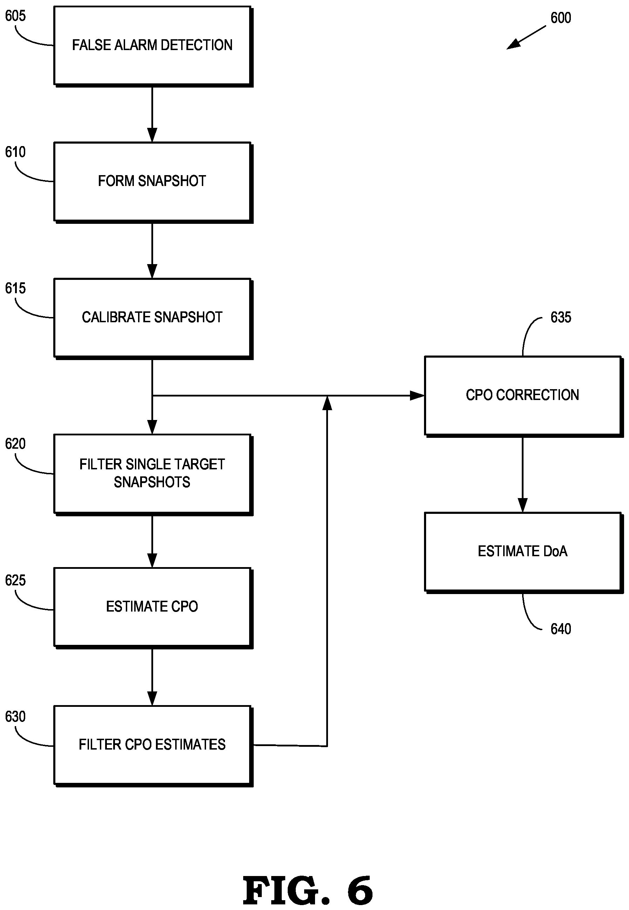

FIG. 6 illustrates a method 600 of performing distributed coherent radar detection including correcting for a carrier phase offset, according to some embodiments. The method 600 is implemented in some embodiments of the coherent distributed radar system 100 shown in FIG. 1 and the portion 200 of the coherent distributed radar system shown in FIG. 2. Prior to beginning method 600, the distributed radar system performs range and Doppler processing on signals generated by transmitting coherent electromagnetic signals and receiving reflected portions of the transmitted signals.

At block 605, a processing unit such as the processing unit 110 shown in FIG. 1 compiles a detection list of candidate objects using a detection algorithm such as a constant false alarm rate (CFAR) detection algorithm. Detected objects are labeled with labels including a detected range, detected velocity, and other labels produced by the detection algorithm. An output representing or indicating detection of the one or more objects can be generated by the processing unit.

At block 610, the processing unit performs spatial processing to generate a "snapshot" for each detection. The snapshot represents a set of complex values and there is one complex value for each combination of a transmitting antenna and a receiving antenna.

At block 615, the processing unit calibrates the snapshot to account for receiver imperfections. In some embodiments, calibration accounts and/or corrects for imperfections including antenna feed line length differences, antenna response differences, transfer differences at receiving antennas, and the like.

At block 620, the processing unit filters snapshots having a single object from the available snapshots. In the illustrated embodiment, only snapshots that include a single object are used by the carrier phase offset estimation algorithms. In some embodiments, the filtering at block 620 is performed based on signal amplitudes because a single object snapshot is expected to have snapshot values that have approximately the same amplitudes. *A priori* knowledge of snapshots from previous radar frames can also be used to assist in filtering or selecting snapshots.

At block 625, the processing unit estimates the carrier phase offset in the received signals. As discussed herein, the carrier phase offset can be estimated using a least-squares method or using a spectrum-based technique applied to phase differences between pairs of signals. In some embodiments, estimates of the carrier phase offset for multiple snapshots can be combined to increase the robustness of the estimate. The carrier phase offsets estimated for different sets of snapshots should be consistent with each other, e.g., the estimated carrier phase offsets should be substantially equal after accounting for variance introduced by factors such as estimator noise.

At block 630, the processing unit applies a filter to the estimated carrier phase offsets to remove inconsistent values of the carrier phase offset. In some embodiments, the estimated carrier phase offsets are averaged, a majority vote is performed, or other method of filtering the carrier phase offsets. Altering the estimated carrier phase offsets can exclude snapshots that contain multiple objects, which would corrupt the overall estimation of the carrier phase offset.

At block 635, the processing unit corrects the final set of carrier phase offset estimates. In some embodiments, the carrier phase offset correction is performed using information generated during calibration of the snapshots at block 615.

At block 640, the processing unit carries out a direction-of-arrival estimation. The direction-of-arrival estimation can be used to extend the detection list by including angular information of the objects.

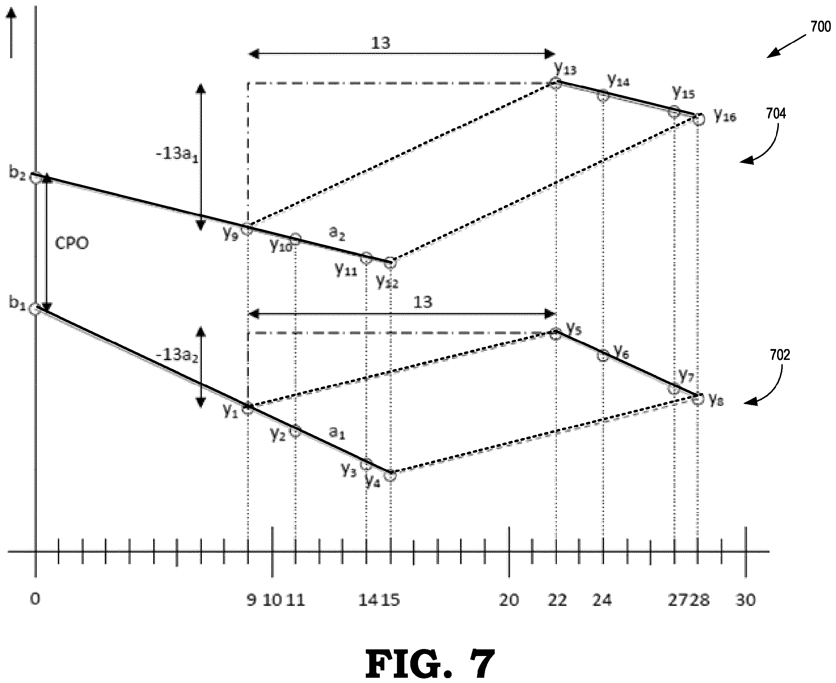

FIG. 7 illustrates a piecewise linear model 700 of phase in a bistatic array snapshot, according to some embodiments. The piecewise linear model 700 is used to estimate a carrier phase offset in a corresponding system of two radar sensors such as the coherent distributed radar system 100 shown in FIG. 1 and the portion 200 of the coherent distributed radar system shown in FIG. 2. The carrier phase offset is estimated using a least-squares method that can be performed as a part of block 625 shown in FIG. 6.

In the illustrated embodiment, the bistatic virtual array is centered and then mirrored so that the modified bistatic virtual array includes a portion 702 that represents the (unmirrored) phase response on the right-hand side of the bistatic virtual array and a portion 704 that represents the phase response on the left-hand side of the bistatic virtual array that has been mirrored to the right-hand side. The phases are unwrapped to remove the ambiguity of an integer amount of $2\pi$ radians that can be introduced when extracting a phase from a phasor. The phases in the portion 702 are denoted as $\{y_1, y_2, ... y_8\}$ and the phases in the portion 704 are denoted as $\{y_9, y_{10}, ... y_{16}\}$. The piecewise linear model 700 includes two linear phase relations: $y = a_1 x + b_1$ and $y = a_2 x + b_2$. A least squares model is used to estimate the parameters $a_1, b_1, a_2, b_2$. In some embodiments, the carrier phase offset is estimated by estimating $b_1$-$b_2$. The phase values $\{y_1, y_2, y_3, y_4\}$ that are extracted from the portion 702 follow the linear relationship with $a_1, b_1$, and the phase values $\{y_9, y_{10}, y_{11}, y_{12}\}$ that are extracted from the portion 704 follow the linear relationship $a_2, b_2$. The phase values $\{y_5, y_6, y_7, y_8\}$ follow the same linear relation as the phase values $\{y_1, y_2, y_3, y_4\}$, but they are shifted by $-13a_1$. A similar property is also true of the phase values $\{y_{13}, y_{14}, y_{15}, y_{16}\}$, which are shifted by $-13a_2$ relative to $\{y_9, y_{10}, y_{11}, y_{12}\}$.

The least-squares model uses a cost function or an error function $E(a_1, a_2, b_1, b_2)$ that minimizes the squared error between the observations and a linear model. In the illustrated embodiment, the error function is:

$$E(a_1, a_2, b_1, b_2,)$$
$$= (9a_1 + b_1 - y_1)^2 + (9a_2 + b_2 - y_9)^2 + (11a_1 + b_1 - y_2)^2$$
$$+ (11a_2 + b_2 - y_{10})^2 + (14a_1 + b_1 - y_3)^2 + (14a_2 + b_2 - y_{11})^2$$
$$+ (15a_1 + b_1 - y_4)^2 + (15a_2 + b_2 - y_{12})^2 + (9a_1 - 13a_2 + b_1 - y_5)^2$$
$$+ (9a_2 - 13a_1 + b_2 - y_{13})^2 + (11a_1 - 13a_2 + b_1 - y_6)^2$$
$$+ (11a_2 - 13a_1 + b_2 - y_{14})^2 + (14a_1 - 13a_2 + b_1 - y_7)^2$$
$$+ (14a_2 - 13a_1 + b_2 - y_{15})^2 + (15a_1 - 13a_2 + b_1 - y_8)^2$$
$$+ (15a_2 - 13a_1 + b_2 - y_{16})^2$$

The error function is differentiated with respect to each of the parameters of the linear model and the resulting function is set equal to zero to define an extrema of the error function.

The partial derivative with respect to $a_1$ is:

$$\begin{aligned}
\frac{1}{2}\frac{\partial E}{\partial a_1} &= 9(9a_1 + b_1 - y_1) + 11(11a_1 + b_1 - y_2) \\
&+ 14(14a_1 + b_1 - y_3) + 15(15a_1 + b_1 - y_4)^2 \\
&+ 9(9a_1 - 13a_2 + b_1 - y_5) - 13(9a_2 - 13a_1 + b_2 - y_{13}) \\
&+ 11(11a_1 - 13a_2 + b_1 - y_6) - 13(11a_2 - 13a_1 + b_2 - y_{14}) \\
&+ 14(14a_1 - 13a_2 + b_1 - y_7) - 13(14a_2 - 13a_1 + b_2 - y_{15}) \\
&+ 15(15a_1 - 13a_2 + b_1 - y_8) - 13(15a_2 - 13a_1 + b_2 - y_{16}) \\
&= 1922a_1 - 1274a_2 + 98b_1 - 52b_2 - 9(y_1 + y_5) - 11(y_2 + y_6) - 14(y_3 + y_7) \\
&- 15(y_4 + y_8) + 13(y_{13} + y_{14} + y_{15} + y_{16}) \qquad (2)
\end{aligned}$$

The partial derivative with respect to $a_2$ is:

$$\begin{aligned}
\frac{1}{2}\frac{\partial E}{\partial a_2} &= -1274a_1 + 1922a_2 - 52b_1 + 98b_2 - 9(y_9 + y_{13}) - 11(y_{10} + y_{14}) - 14(y_{11} + y_{15}) \\
&- 15(y_{12} + y_{16}) + 13(y_5 + y_6 + y_7 + y_8) \qquad (3)
\end{aligned}$$

The partial derivative with respect to $b_1$ is:

$$\begin{aligned}
\frac{1}{2}\frac{\partial E}{\partial b_1} &= (9a_1 + b_1 - y_1) + (11a_1 + b_1 - y_2) \\
&+ (14a_1 + b_1 - y_3) + (15a_1 + b_1 - y_4) \\
&+ (9a_1 - 13a_2 + b_1 - y_5) + (11a_1 - 13a_2 + b_1 - y_6) \\
&+ (14a_1 - 13a_2 + b_1 - y_7) + (15a_1 - 13a_2 + b_1 - y_8) \\
&= 98a_1 - 52a_2 + 8b_1 - \sum_{i=1}^{8} y_i
\end{aligned}$$

The partial derivative with respect to $b_2$ is:

$$\frac{1}{2}\frac{\partial E}{\partial b_2} = -52a_1 + 98a_2 + 8b_2 - \sum_{i=9}^{16} y_i$$

The partial derivatives are equated to zero and the phase responses moved to the right-hand side of the equation to generate the least squares solution as a matrix vector problem. In the illustrated embodiment, the matrix vector problem to be solved is:

$$\begin{pmatrix} 1922 & -1274 & 98 & -52 \\ -1274 & 1922 & -52 & 98 \\ 98 & -52 & 8 & 0 \\ -52 & 98 & 0 & 8 \end{pmatrix} \begin{pmatrix} a_1 \\ a_2 \\ b_1 \\ b_2 \end{pmatrix} = \begin{pmatrix} \underline{p}_1^T & \underline{p}_1^T & \underline{0}^T & -13(\underline{1}^T) \\ \underline{0}^T & -13(\underline{1}^T) & \underline{p}_1^T & \underline{p}_1^T \\ \underline{1}^T & \underline{1}^T & \underline{0}^T & \underline{0}^T \\ \underline{0}^T & \underline{0}^T & \underline{1}^T & \underline{1}^T \end{pmatrix} \underline{y}$$

Where $\underline{p}_1^T = (9,11,14,15)$ and $\underline{1}$ and $\underline{0}$ are the length all-one and all-zero matrices, respectively. The inverse of the matrix with which the parameters are multiplied is given by:

$$\frac{1}{1534}\begin{pmatrix} 4 & 0 & -49 & 26 \\ 0 & 4 & 26 & -49 \\ -49 & 26 & 961 & -637 \\ 26 & -49 & -637 & 961 \end{pmatrix}$$

As discussed above, the carrier phase offset estimate only requires determining the difference between $b_1$ and $b_2$. In the illustrated embodiment, this difference is given by:

$$b_1 - b_2 = \sum_{i=1}^{8} w_i(y_i - y_{i+8}),$$

where

$$w_i = \frac{923}{1534}, \frac{773}{1534}, \frac{548}{1534}, \frac{473}{1534}, -\frac{52}{1534}, -\frac{202}{1534}, -\frac{427}{1534}, -\frac{502}{1534},$$

for $i = 1, \dots, 8$.

The estimate of the carrier phase offset is then given by the following weighted sum of phase differences:

$$CPO = \sum_{i=1}^{8} w_i(y_i - y_{i+8})$$

Substituting the piecewise linear models, one obtains:

$$
\begin{aligned}
z_i &= y_i - y_{i+8}, \\
&= p_i(a_1 - a_2) + (b_1 - b_2), \\
&\doteq p_i a_3 + b_3 \quad \text{for} \quad i = 1,\ldots,8
\end{aligned}
$$

where $p_i$ = 9,11, 14, 15, 22, 24, 27, 28 for $i$ = 1, 8., *i.e.*, they are at the positions of the folded array.

The above discussion implies that the bistatic snapshot ($X_i$, $i$ = 1, ...,16) from which the phase information $y_i$ is extracted can be transformed into a folded snapshot $\tilde{X}_i = X_i X_{i+8}^*$. The phase of the folded snapshot should have a linear phase response. The symmetry of the bistatic array implies that a least squares fitting technique can be applied to the folded array. In that case, the least-squares problem can be formulated as:

$$
\begin{pmatrix} \underline{p}^T p & \underline{p}^T \underline{1} \\ \underline{p}^T \underline{1} & 8 \end{pmatrix}
\begin{pmatrix} a_3 \\ b_3 \end{pmatrix}
= \begin{pmatrix} \underline{p}^T \\ \underline{1}^T \end{pmatrix} \underline{z},
$$

Where $\underline{p}^T$ = (9,11,14,15,22,24,27,28) and $\underline{1}$ is the all-one vector of length 8. The estimate of the carrier phase offset is then:

$$CPO = b_3 = \sum_{i=1}^{8} w_i z_i,$$

Some embodiments of carrier phase offset estimation therefore include:

- extracting phase information $y_i$ from a bistatic snapshot
- unwrapping the phases so that the phases $y_i$ exhibit an approximate piecewise linear behavior
- estimating the carrier phase offset as a weighted sum of the phases $y_i$
- determining weights by the positions of elements in the folded bistatic array and applying the least-squares fitting method
- in embodiments where the bistatic array is symmetric, the carrier phase offset is the weighted sum of phase differences $z_i = y_i - y_{i+8}$

Direction-of arrival and/or direction-of-departure information can also be derived from the snapshots by calculating the slopes $a_1$, $a_2$. The first slope $a_1$ represents the direction-of-arrival angle from the first radar sensor with the relation $a_1 = \pi \sin \varphi_1$. Since the second slope $a_2$ is obtained by mirroring the antenna elements, its relation to the direction-of-arrival angle $\varphi_2$ of the second radar sensor is given by $a_2 = \pi \sin \varphi_2$. The first angle $\varphi_1$ is also the direction-of-departure angle of the second radar sensor and the second angle $\varphi_2$ is the direction-of-departure angle of the first radar sensor. In the case of single bounce reflections $\varphi_1 \leq \varphi_2$, and for distant objects $\varphi_1 \approx \varphi_2$. These properties can be used as a coarse discriminator for single bounce versus multi-bounce reflections. A more accurate indicator can be obtained by analyzing the first and second angles $\varphi_1, \varphi_2$ in relation to the detected bistatic range $R$. For example, for a given first angle and second angle and a baseline, the detected bistatic range $R$ should be:

$$R = \frac{B}{2} \frac{\cos \phi_1 + \cos \phi_2}{|\sin(\phi_1 - \phi_2)|}$$

Good estimates of the first and second angles $\varphi_1, \varphi_2$ should be available to use the above expression. This expression also shows that for the limit case $\varphi_1 = \varphi_2$ the object should be at infinity, *i.e.*, a bistatic response having the same direction-of-departure and direction-of-arrival is true for very distant objects.

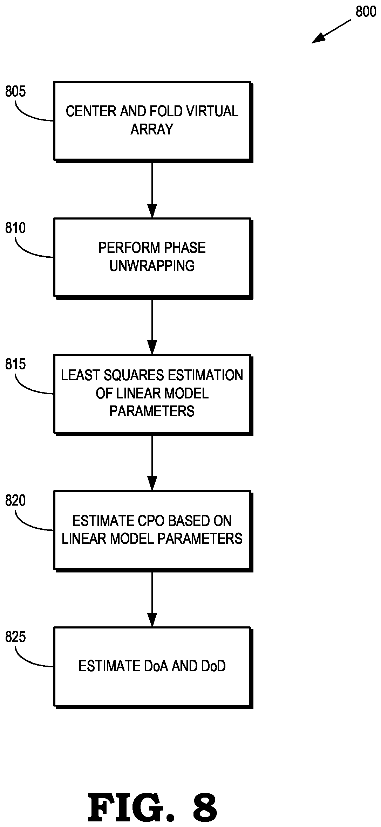

FIG. 8 illustrates a method 800 of estimating a carrier phase offset between two radar sensors in a coherent distributed radar system using a least-squares method, according to some embodiments. The method 800 is implemented in some embodiments of the coherent distributed radar system 100 shown in FIG. 1, the portion 200 of the coherent distributed radar system shown in FIG. 2, and in the block 625 of the method 600 shown in FIG. 6.

At block 805, a bistatic virtual array is centered and then folded so that elements on the left-hand side of the bistatic virtual array are mirrored to the right-hand side of the bistatic virtual array. An example of a folded bistatic virtual array is shown in FIG. 7.

At block 810, phase unwrapping is performed to remove the ambiguity of an integer amount of $2\pi$ radians that can be introduced when extracting a phase from a phasor.

At block 815, a least-squares estimation technique is used to estimate the linear model parameters that represent the phase response in the bistatic virtual array, as discussed herein.

At block 820, the carrier phase offset is estimated based on the linear model parameters generated using the least-squares estimation technique.

In some embodiments, at block 825, directions-of-arrival and directions-of-departure at the radar sensors in the coherent distributed radar system are estimated, as discussed herein.

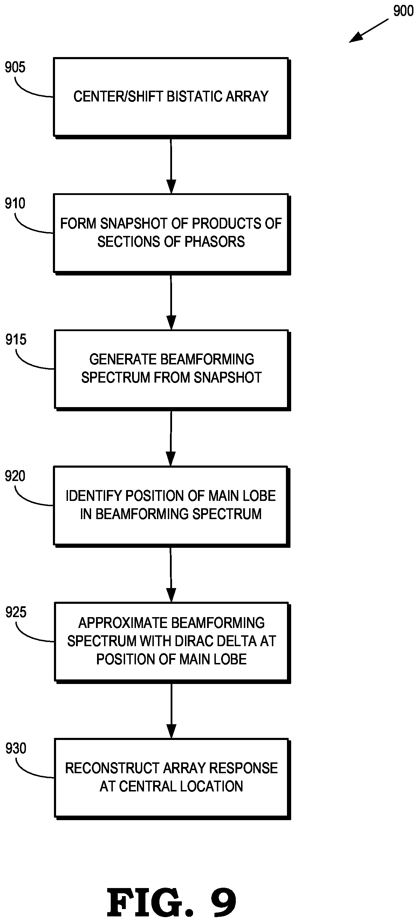

FIG. 9 illustrates a method 900 of estimating a carrier phase offset between two radar sensors in a coherent distributed radar system using a spectrum-based technique applied to phase differences between pairs of signals, according to some embodiments. The method 900 is implemented in some embodiments of the coherent distributed radar system 100 shown in FIG. 1, the portion 200 of the coherent distributed radar system shown in FIG. 2, and in the block 625 of the method 600 shown in FIG. 6. In the illustrated embodiment, a bistatic array that represents antenna elements in the two radar sensors is symmetrical and the bistatic snapshots are filtered so that they include a single object.

At block 905, a bistatic array of virtual antenna elements associated with the radar sensors is centered so that the middle of the array ends up at location 0, as discussed herein. In some embodiments, the centered bistatic array can also be shifted by one or more integer shifts.

At block 910, a folded bistatic snapshot is generated by combining sections of snapshots in different portions of the bistatic virtual array. The snapshots share a position of their virtual antenna elements in the folded bistatic snapshot. In some embodiments, the folded bistatic snapshot can be represented as $\tilde{X}_i = X_i X_{i+L}^*$, where $X_i$ is a snapshot from the bistatic virtual array and L is half the size of the bistatic virtual array. Thus, after folding, the elements in the folded snapshot share antenna positions, such as $y_1$ and $y_9$ sharing the position 9. For example, a difference snapshot can be generated by multiplying the complex values of the first signals with complex conjugates of the complex values of the second signals that share a virtual antenna position in the virtual array after folding. The folded bistatic virtual array snapshot can also be referred to as the difference snapshot because the complex conjugate is used in the multiplication of the two individual snapshots. Consequently, an argument of the difference snapshot represents a difference between the phases of the signals associated with the individual snapshots.

At block 915, a beamforming spectrum $Y(k)$ is generated based on the difference snapshot. In some embodiments, the beamforming spectrum is generated by applying a Fast Fourier Transform (FFT) to the difference snapshot. Zero-insertion and zero-padding can be applied so that the input to the FFT algorithm has a length $N_{FFT}$.

At block 920, a position of a main lobe and the beamforming spectrum is identified. In some embodiments, a peak location $\tilde{k}$ and a spectrum peak value $Y(\tilde{k})$ - or the peak of the square $|Y(\tilde{k})|^2$ - are identified within the main lobe of the beamforming spectrum. The peak location $\tilde{k}$ represents an estimate of the combined phase slope $a_1$-$a_2 = \pi(\sin\varphi_1 - \sin\varphi_2)$, where angles $\varphi_1$ and $\varphi_2$ are the direction-of-arrival angles for the first and second radar sensors, respectively. For example, the index position can be an integer position related to the grid in which the beamforming spectrum is calculated. A refined maximum position can be calculated by interpolation using the maximum value at $k$, and the values at $k-1$ and $k+1$. The refined peak location $\tilde{k}$ is not necessarily an integer and can contain a fractional part. When the beamforming spectrum is called Z, then the maximum of $|Z|^2$ is determined.

At block 925, the beamforming spectrum is replaced with an approximate beamforming spectrum that is represented by a Dirac delta function $Y(\tilde{k})\delta(k - \tilde{k})$ at the peak location in the main lobe. In some embodiments, the amplitude $Y(\tilde{k})$ is determined by interpolation, as in block 920.

At block 930, the array response at the central location is reconstructed. In some embodiments, reconstruction of the array response includes extrapolation to an element $m$ at a position using an inverse Fourier transform, such as an inverse FFT (IFFT):

$$\tilde{X}(m) = Y(\tilde{k})e^{j2\pi\frac{\tilde{k}m}{N_{FFT}}}$$

The carrier phase offset can then be estimated as:

$$CPO = arg\{\tilde{X}(0)\} = arg\{Y(\tilde{k})\}$$

Thus, instead of getting separate estimates for the slopes $a_1$ and $a_2$, the method 900 produces an estimate for the difference between the two slopes, $a_1 - a_2$. In some embodiments, a sum of the two slopes, $a_1 + a_2$, can also be derived using a second folded bistatic array snapshot. For example, the sum can be determined and used to generate independent estimates of the slopes as follows:

- determine a second folded bistatic snapshot, $\tilde{X}_i = X_i X_{i+L}$. This snapshot is referred to as the sum snapshot because the phases of the two portions of the unfolded snapshot are added, i.e., no complex conjugate is applied to either of the individual snapshots.

- The beamforming spectrum $Y(k)$ is determined using an FFT and, if necessary, zero-insertion and zero-padding so that the input to the FFT has the length NFFT.

- A peak location $\bar{k}$ and a spectrum peak value $Y(\bar{k})$ are identified within the main lobe of the beamforming spectrum. The peak location $\bar{k}$ represents an estimate of the combined phase slope $a_1 + a_2 = \pi(\sin \varphi_1 + \sin \varphi_2)$, where angles $\varphi_1$ and $\varphi_2$ are the direction-of-arrival angles for the first and second radar sensors, respectively.

- The estimates for the difference $a_1 - a_2$ and the sum $a_1 + a_2$ of the slopes can be combined to determine $a_1$ and $a_2$ separately, as well as separately determining $\varphi_1$ and $\varphi_2$.

- Single bounce reflections are expected to fulfill the criterion $\varphi_1 \leq \varphi_2$ and the detected bistatic range should satisfy:

$$R = \frac{B}{2} \frac{\cos \phi_1 + \cos \phi_2}{\left| \sin(\phi_1 - \phi_2) \right|}$$

Note that not all the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, a person of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the embodiments disclosed above may be altered or modified and all such variations are considered within the scope of the disclosed subject matter. Accordingly, the protection sought herein is set forth in the claims below.

**Claims**

1. A method comprising:

   receiving, by first antennas in a first radar sensor, first signals transmitted by at least one second antenna in a second radar sensor and reflected by at least one object;
   receiving, by third antennas in the second radar sensor, second signals transmitted by at least one fourth antenna in the first radar sensor and reflected by the at least one object;
   generating a snapshot comprising complex values that represent phase responses of the first signals and the second signals; and
   estimating a carrier phase offset between the first signals and the second signals based on the snapshot.

2. The method of claim 1, wherein the snapshot comprises first information indicating relative phases of the first signals received by the first antennas and second information indicating relative phases of the second signals received by the third antennas.

3. The method of claim 2, further comprising:
generating, based on the snapshot, a virtual array that represents the phase responses of the first signals as a function of separations between the first antennas and the at least one second antenna and the phase responses of the second signals as a function of separations between the third antennas and the at least one fourth antenna.

4. The method of claim 3, wherein the virtual array comprises a plurality of piecewise linear phase relations corresponding to positions of the at least one second antenna and the at least one fourth antenna.

5. The method of claim 4, further comprising:

determining slopes of the plurality of piecewise linear phase relations based on a first direction-of-arrival of the first signals and a second direction-of-arrival of the second signals;
determining offsets between the plurality of piecewise linear phase relations based on a first direction-of-departure of the first signals and a second direction-of-departure of the second signals; and
estimating the carrier phase offset based on the slopes and the offsets.

6. The method of claim 4, wherein the first signals and the second signals are reflected by a single object, and wherein estimating the carrier phase offset comprises estimating the carrier phase offset based on phase differences between the first signals and the second signals.

7. The method of claim 6, wherein the virtual array is symmetric, and further comprising:

generating a difference snapshot by multiplying the complex values of the first signals with complex conjugates of the complex values of the second signals that share a position of a virtual antenna in the virtual array after folding; and
estimating the carrier phase offset based on the difference snapshot.

8. The method of claim 7, wherein estimating the carrier phase offset comprises:

determining a beamforming spectrum based on a Fourier transform of the difference snapshot;
identifying a peak location in the beamforming spectrum and a spectrum peak value; and
performing an inverse Fourier transform of the spectrum peak value to estimate the carrier phase offset.

9. An apparatus comprising:

a first radar sensor comprising a plurality of first antennas and at least one second antenna;
a second radar sensor comprising a plurality of third antennas and at least one fourth antenna, the first antennas being configured to receive first signals transmitted by the at least one fourth antenna and reflected by at least one object, the third antennas configured to receive second signals transmitted by the at least one second antenna and reflected by the at least one object; and
at least one processing unit configured to generate a snapshot comprising complex values that represent phase responses of the first signals and the second signals and estimate a carrier phase offset between the first signals and the second signals based on the snapshot.

10. The apparatus of claim 9, wherein the snapshot comprises first information indicating relative phases of the first signals received by the first antennas and second information indicating relative phases of the second signals received by the third antennas.

11. The apparatus of claim 10, wherein the processing unit is configured to generate, based on the snapshot, a virtual array that represents the phase responses of the first signals as a function of separations between the first antennas and the at least one fourth antenna and the phase responses of the second signals as a function of separations between the third antennas and the at least one second antenna.

12. The apparatus of claim 11, wherein the virtual array comprises a plurality of piecewise linear phase relations corresponding to positions of the at least one second antenna and the at least one fourth antenna.

13. The apparatus of claim 12, wherein the processing unit is configured to:

> determine slopes of the plurality of piecewise linear phase relations based on a first direction-of-arrival of the first signals and a second direction-of-arrival of the second signals;
> determine offsets between the plurality of piecewise linear phase relations based on a first direction-of-departure of the first signals and a second direction-of-departure of the second signals; and
> estimate the carrier phase offset based on the slopes and the offsets.

14. The apparatus of claim 13, wherein the processing unit is configured to determine the slopes and the offsets using a least-squares method.

15. The apparatus of claim 14, wherein the first signals and the second signals are reflected by a single object, and wherein the processing unit is configured to estimate the carrier phase offset based on phase differences between the first signals and the second signals.

**Amended claims in accordance with Rule 137(2) EPC.**

1. A method comprising:

> receiving, by first antennas in a first radar sensor (202), first signals transmitted by at least one second antenna in a second radar sensor (204) and reflected by at least one object (106);
> receiving, by third antennas in the second radar sensor, second signals transmitted by at least one fourth antenna in the first radar sensor and reflected by the at least one object;
> generating a snapshot comprising complex values that represent phase responses of the first signals and the second signals, wherein the snapshot comprises first information indicating relative phases of the first signals received by the first antennas and second information indicating relative phases of the second signals received by the third antennas;
> generating, based on the snapshot, a virtual array that represents the phase responses of the first signals as a function of separations between the first antennas and the at least one second antenna and the phase responses of the second signals as a function of separations between the third antennas and the at least one fourth antenna, wherein the virtual array comprises a plurality of piecewise linear phase relations corresponding to positions of the at least one second antenna and the at least one fourth antenna; and
> estimating a carrier phase offset (310), caused by differences between respective carrier wave frequencies of the first and second radar sensors, between the first signals and the second signals based on the snapshot.

2. The method of claim 1, further comprising:

> determining slopes of the plurality of piecewise linear phase relations based on a first direction-of-arrival of the first signals and a second direction-of-arrival of the second signals;
> determining offsets between the plurality of piecewise linear phase relations based on a first direction-of-departure of the first signals and a second direction-of-departure of the second signals; and
> estimating the carrier phase offset based on the slopes and the offsets.

3. The method of claim 1, wherein the first signals and the second signals are reflected by a single object, and wherein estimating the carrier phase offset comprises estimating the carrier phase offset based on phase differences between the first signals and the second signals.

4. The method of claim 3, wherein the virtual array is symmetric, and further comprising:

> generating a difference snapshot by multiplying the complex values of the first signals with complex conjugates of the complex values of the second signals that share a position of a virtual antenna in the virtual array, after folding such that that elements on a left-hand side of the bistatic virtual array are mirrored to a right-hand side of the virtual array ; and
> estimating the carrier phase offset based on the difference snapshot.

5. The method of claim 4, wherein estimating the carrier phase offset comprises:

> determining a beamforming spectrum based on a Fourier transform of the difference snapshot;

identifying a peak location in the beamforming spectrum and a spectrum peak value; and

performing an inverse Fourier transform of the spectrum peak value to estimate the carrier phase offset.

6. An apparatus comprising:

a first radar sensor comprising a plurality of first antennas (211,..214) and at least one second antenna (210);

a second radar sensor comprising a plurality of third antennas (221... 224) and at least one fourth antenna (220), the first antennas being configured to receive first signals transmitted by the at least one fourth antenna and reflected by at least one object (206), the third antennas configured to receive second signals transmitted by the at least one second antenna and reflected by the at least one object; and

at least one processing unit (110) configured to:

generate a snapshot comprising complex values that represent phase responses of the first signals and the second signals, wherein the snapshot comprises first information indicating relative phases of the first signals received by the first antennas and second information indicating relative phases of the second signals received by the third antennas;

generate, based on the snapshot, a virtual array that represents the phase responses of the first signals as a function of separations between the first antennas and the at least one fourth antenna and the phase responses of the second signals as a function of separations between the third antennas and the at least one second antenna, wherein the virtual array comprises a plurality of piecewise linear phase relations corresponding to positions of the at least one second antenna and the at least one fourth antenna;

and estimate a carrier phase offset (310), caused by differences between respective carrier wave frequencies of the first and second radar sensors, between the first signals and the second signals based on the snapshot.

7. The apparatus of claim 6, wherein the processing unit is configured to:

determine slopes of the plurality of piecewise linear phase relations based on a first direction-of-arrival of the first signals and a second direction-of-arrival of the second signals;

determine offsets between the plurality of piecewise linear phase relations based on a first direction-of-departure of the first signals and a second direction-of-departure of the second signals; and

estimate the carrier phase offset based on the slopes and the offsets.

8. The apparatus of claim 7, wherein the processing unit is configured to determine the slopes and the offsets using a least-squares method.

9. The apparatus of claim 8, wherein the first signals and the second signals are reflected by a single object, and wherein the processing unit is configured to estimate the carrier phase offset based on phase differences between the first signals and the second signals.

10. The apparatus of claim 6 or 7, wherein the virtual array is symmetric, and the processing unit is configured to:

generate a difference snapshot by multiplying the complex values of the first signals with complex conjugates of the complex values of the second signals that share a virtual antenna position in the virtual array after folding; and

estimate the carrier phase offset based on the difference snapshot.

11. The apparatus of claim 10, wherein the processing unit is configured to:

determine a beamforming spectrum based on a Fourier transform of the difference snapshot; identify a peak location in the beamforming spectrum and a spectrum peak value;

and perform an inverse Fourier transform of the peak spectrum value to estimate the carrier phase offset.

**FIG. 1**

**FIG. 2**

EP 4 749 321 A1

**FIG. 3**

FIG. 4

**FIG. 5**

EP 4 749 321 A1

605 FALSE ALARM DETECTION

600

610 FORM SNAPSHOT

615 CALIBRATE SNAPSHOT

635 CPO CORRECTION

620 FILTER SINGLE TARGET SNAPSHOTS

625 ESTIMATE CPO

ESTIMATE DoA

640

630 FILTER CPO ESTIMATES

# FIG. 6

**FIG. 7**

EP 4 749 321 A1

800

805 CENTER AND FOLD VIRTUAL ARRAY

810 PERFORM PHASE UNWRAPPING

815 LEAST SQUARES ESTIMATION OF LINEAR MODEL PARAMETERS

820 ESTIMATE CPO BASED ON LINEAR MODEL PARAMETERS

825 ESTIMATE DoA AND DoD

# FIG. 8

900

905 CENTER/SHIFT BISTATIC ARRAY

910 FORM SNAPSHOT OF PRODUCTS OF SECTIONS OF PHASORS

915 GENERATE BEAMFORMING SPECTRUM FROM SNAPSHOT

920 IDENTIFY POSITION OF MAIN LOBE IN BEAMFORMING SPECTRUM

925 APPROXIMATE BEAMFORMING SPECTRUM WITH DIRAC DELTA AT POSITION OF MAIN LOBE

930 RECONSTRUCT ARRAY RESPONSE AT CENTRAL LOCATION

# FIG. 9

Europäisches
Patentamt

European
Patent Office

Office européen
des brevets

# EUROPEAN SEARCH REPORT

**Application Number**

EP 24 21 4914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/314562 A1 (VAN HOUTUM WILHELMUS JOHANNES [NL] ET AL) 5 October 2023 (2023-10-05) * paragraphs [0104] - [0107], [0113] - [0115], [0093], [0098], [0099]; claim 1 * | 1-15 | INV. G01S7/40 G01S13/42 G01S13/87 |
| A | US 2022/187417 A1 (WU RYAN HAOYUN [US] ET AL) 16 June 2022 (2022-06-16) * paragraphs [0022] - [0028]; figure 1 * | 1-15 | |
| A | US 2024/288538 A1 (KISHIGAMI TAKAAKI [JP] ET AL) 29 August 2024 (2024-08-29) * paragraphs [0263] - [0285]; figures 1-3 * | 1-15 | |

| | | | TECHNICAL FIELDS SEARCHED (IPC) |
|---|---|---|---|
| | | | G01S |

The present search report has been drawn up for all claims

| Place of search | Date of completion of the search | Examiner |
|---|---|---|
| Munich | 2 May 2025 | Metz, Carsten |

EPO FORM 1503 03.82 (P04C01)

## ANNEX TO THE EUROPEAN SEARCH REPORT
## ON EUROPEAN PATENT APPLICATION NO.

EP 24 21 4914

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | | Publication date |
|---|---|---|---|---|
| US 2023314562 A1 | 05-10-2023 | CN | 116893399 A | 17-10-2023 |
| | | EP | 4258019 A1 | 11-10-2023 |
| | | US | 2023314562 A1 | 05-10-2023 |
| US 2022187417 A1 | 16-06-2022 | CN | 111708027 A | 25-09-2020 |
| | | EP | 3712652 A1 | 23-09-2020 |
| | | US | 2020300965 A1 | 24-09-2020 |
| | | US | 2022187417 A1 | 16-06-2022 |
| US 2024288538 A1 | 29-08-2024 | JP | WO2023074275 A1 | 04-05-2023 |
| | | US | 2024288538 A1 | 29-08-2024 |
| | | WO | 2023074275 A1 | 04-05-2023 |

EPO FORM P0459

For more details about this annex : see Official Journal of the European Patent Office, No. 12/82